# EUROPEAN PATENT APPLICATION

(11) **EP 1 980 991 A1**
(43) Date of publication of application: **15.10.2008**
(21) Application number: 07007428.1
(22) Date of filing: 11.04.2007
(51) Int. Cl.: G06Q 30/00, H04N 7/24

(54) **Method for supplying information to a digital content**

(71) Applicant: Vodafone Holding GmbH, 40213 Düsseldorf (DE)
(72) Inventor: van de Bergh, Marco, 6221 JE Maastricht (NL); Schuster, Wolfgang, 81377 München (DE); Barry, Peter, Alamo, California 94507 (US)
(74) Representative: Müller, Thomas

(57) **Abstract**

The invention relates to a method for supplying information to a digital content by a digital content producer, whereas the digital content is developed for a visual and/or acoustic display at at least one mobile electronic terminal, whereby the information is been supplied by the digital content producer in form of metadata, which are assigned to the digital content, and that the metadata possesses details for inserting additional content into the digital content.

## Description

The invention relates to a method for supplying information to a digital content by a digital content producer, whereas the digital content is developed for a visual and/or acoustic display at at least one mobile electronic terminal.

Mobile Advertising is gaining traction in the marketplace. The increasing availability of multimedia content is opening a very large opportunity for sophisticated forms of mobile advertising. As content that already incorporates advertising, i.e. like live TV programming, makes its way as well to mobile handsets. Brands and entertainment content provider are beginning to see the value of presenting full multimedia advertisements with programs.

Therefore providers across the value chain are developing their strategies and positioning themselves in this market space. Operators are either testing various forms of advertising with 3G services or are allowing advertisements to be served on their portals. A number of multimedia companies are launching advertising within their multimedia offering.

The key advantage of a mobile device, like a mobile phone, is that it is a very personal device that a lot of people carry with them 24 hours a day. Therefore one aim of advertisers is to present very targeted and time-sensitive information that is of interest to the costumer. The target group of an advertiser can be reached 24 hours a day, a lot more efficient and a lot more intensive. It is possible to reach a customer through a medium that puts information about products and services directly to the customers' hands. The click rates of mobile advertisements are a lot higher than the click rates of internet banner advertisements, because it is possible to reach the customer more directly. Mobile advertising enables an advertiser to reach a highly desirable demographic target group. Mobile advertising enables an advertiser to easily and cost-effectively advertise in an uncluttered environment, reach a certain audience and deliver personalized messages.

To further stimulate market development, companies are offering automated mobile advertisement insertion and inventory management solutions. Automating the mobile advertising marketplace implies a high degree of standardized interconnects between companies in the mobile advertising place. Some of the information exchanged between the parties in the value chain needs to be protected by DRM technology to protect the creators rights.

Digital content can be for example mobile software games, mobile videos or MP3 songs. To provide mobile advertising in digital content there is a very complex value chain. That means there are a lot of relationships between various actors in the value chain. First of all there are the advertisers. The advertisers are companies wanting to communicate their brands or products to a large customer base. Then, there are the content producers, which are responsible for producing the digital content. Between the advertisers and the content producers are two more actors. At first, there are the advertisement agencies. The advertisement agencies are contracted by the advertisers to produce an advertising campaign on their behalf. Typically these advertisement agencies are responsible for creative production, the actual creation of the advertisement and the media planning, like selecting the target groups for the advertisement, the time planning of the release of the advertisement or selecting the medium, i.e. newspapers, TV, mobile devices, etc.. The second actor between the advertisers and the content producers are the advertisement insertion intermediaries. The advertisement insertion intermediaries are managing contracts between mobile operators and/or mobile content publishers on one side and advertisers and/or advertisement agencies on the other side. With these advertisement insertion intermediaries two distinct roles can be identified. The mobile advertising inventory, which is a party owning an inventory of mobile advertising content ready for insertion in digital content. Further the insertion technology provider, which is a party having developed special technology capabilities to insert advertisements in digital content channels, like SMS or mobile games. The content producers should give its consent to the advertisement insertion intermediary to insert advertisements in its content. This relationship is based on industry ethics and the necessity to avoid copyright claims. The relationship between the advertisement agencies and the advertisement insertion intermediary is a contractual relationship quantifying the delivery of advertisements over a certain channel for a certain price. The operator or content publisher and the advertisement insertion intermediary have a contractual relationship which allows the advertisement insertion intermediary to insert advertisements in content on the publisher sides. Usually this also contains some form of revenue share agreement for the advertising value of the content. The relationship between the content producer and the content publisher, i.e. an operator, is a contractual relationship, which allows the content publisher to publish the content publisher's content on its sides. Usually this also contains some form of revenue share agreement for the value of the content. That means, the content producer does often not care whether the publisher get the money from its customers or from the advertiser.

The current mobile advertising market is characterized by the many contracts between the actors of the mobile advertising value chain described before. There are many contracts necessary to deliver a national mobile advertising campaign. In this sense, the mobile advertising value chain is more complex than other forms of advertising. The advertisement agencies need to establish contracts with multiple, around 3.5, content publishers, typically the mobile operators of a specific country, in order to be able to address a national audience. This set up of ad hoc contracts with operators is currently a time consuming activity. The content publisher needs to have a constant supply of advertisements to keep their ad-sponsored content channels operational. The operators have to contact multiple content producers to get their consent for inserting advertisements in their content.

This difficulties and market inefficiencies justifies the existence of the advertisement insertion intermediary. The advertisement insertion intermediaries manage for example a number of contracts with national telecom operators or other content publishers for the advertisement agencies and advertisers and therefore make ad hoc campaigns easier to plan and implement on a national scale. The advertisement insertion intermediaries manage a number of contracts with advertisement agencies and advertisers for mobile telecom operators or mobile content publishers and therefore guarantee a constant flow of advertisements for their advertisement-sponsored content channels. Further, the advertisement insertion intermediaries manage a portfolio of technology solutions for inserting advertisement on behalf of operators/content publishers and advertisement agencies and can therefore offer a large range of technical advertising solutions, like SMS, video insertion, game insertion, etc..

But in the current mobile advertising market, there is still a necessity for communication between content producers and other parties in the mobile value chain. The content producers must give their consent to third parties for inserting advertisements in their digital content. Copyright issues are to be avoided, because advertisement insertion can be seen as a form of content mixing. Some advertisement insertion technologies require specific actions of content producers to enable advertisements in content. Parties owning a proprietary insertion technology need to agree with content producers on the exact technology solution which needs to be imbedded in their content. Sometimes content producers must let the other parties in the mobile advertising value chain know the exact location of the mobile advertisement whitespace embedded in their content, i.e. advertisement space in between game levels, advertisement space on the billboard of a football game.

The problem to be solved by the present invention is thus to overcome these remaining inefficiencies of the known solutions. That means, the aim of the invention is to provide a method for supplying information to a digital content by a digital content producer, whereas the digital content is developed for a visual and/or acoustic display, that allows interconnects between companies in the mobile advertising place and value chain in an easy and cheap way. The method should help to further automate the process of inserting additional information, like advertisements, to a digital content of digital content producer.

The invention is based on the finding that the problem can be solved by a method for supplying information to a digital content by a digital content producer, whereas the digital content is developed for a visual and/or acoustic display at at least one mobile electronic terminal.

The problem is solved by a method according to independent claim 1. Further features and advantageous embodiments will become apparent from the dependent claims and the description.

The present invention relates to a method for supplying information to a digital content by a digital content producer, whereas the digital content is developed for a visual and/or acoustic display at at least one mobile electronic terminal, whereby the information is been supplied by the digital content producer in form of metadata, which are assigned to the digital content, and that the metadata possesses details for inserting additional content into the digital content.

To supply the information in form of metadata, which are assigned to the digital content, and whereby the metadata possesses details for inserting additional content into the digital content, describes an easy way for companies and actors to interconnect with each other for supplying information and inserting additional content into digital content displayed on a mobile electronic terminal and inserted in a foreign software program, respectively. The content producer can determine and stipulate in a simple and cheap way the form and the requirements of the additional content which can be inserted into the digital content. Digital content can be mobile games, can be SMS or MMS, MP3 songs or mobile videos. Any party in the value chain knows directly by looking into the metadata of the digital content of the content producer, what is necessary to do to insert additional content and what is possible to insert. The additional content in the light of the invention is preferred advertisement. But the additional content can be any other content, like information about videos or songs.

Metadata in the light of the invention shall be information about data. That means the metadata shall be information about the digital content itself. Any party who wants to insert additional content into the digital content of the content publisher can therefore look into the metadata and use this information to prepare the additional content. If all content producers handle the metadata in the same way, it is easier for the other parties in the value chain to fulfil the requirements written down in the metadata. The content producer can write down all important information in the metadata, which are necessary for inserting additional content into his digital content. Any party can act in accordance with the information shown in the metadata of the digital content. The metadata is structured, encoded data that describe characteristics of the digital content. i.e. free space in the digital content. The metadata are data that describe the structure and workings of an organization's use of the digital content.

This solution, to supply the information to a digital content in form of metadata, which are assigned to the digital content, whereby the metadata possesses details for inserting additional content into the digital content, shows a very easy and cheap way to get information about the inserting details. This helps the different parties in the market for inserting additional content into digital content. The metadata can include and therefore provide all general conditions and framework requirements which are necessary for inserting additional content into existing digital content. The metadata presents rules and guidelines for inserting additional content into the digital content, i.e. into free space of the digital content.

The inventive method reduces the need for advertisement inserting intermediaries to negotiate separate contracts with content producers. The solution avoids copyright issues when mixing additional content with existing digital content. Further, the solution makes the advertisement inserting intermediary market more efficient and therefore more competitive. And the proposed method makes it easier for advertisement inserting intermediaries to increase the context awareness of their advertising solutions.

The additional content is shown on a display and/or is announced by loudspeaker means of a mobile electronic terminal, like a mobile telephone, a PDA or the like. The additional content can be seen or can be heard by the user of the mobile electronic terminal.

Preferred is a method, whereby the additional content comprises advertising. As described before, the additional content can be all kind of information or data, but the additional content is in the first instance advertisement. By inserting advertisement into the digital content of a content producer it is easy to reach a certain target group directly. The value of mobile advertising according to the inventive method lies in the ability to target specific persons or groups of persons, the availability of a direct response, i.e. via SMS, the customer reach, because more than 90% of the western population uses mobile electronic terminals, and in the ability to reach the customers anywhere and anytime. The metadata possesses details for inserting advertisement into the digital content. Every party knows how to insert advertisement, because through the metadata all requirements for inserting advertisement are given in a very easy way.

Advantageous is a method, whereby the metadata specifies information about the location, where the additional content can be inserted into the digital content. This makes it easy for advertisers to recognise, whether to place for the additional content is good or not. That means the metadata shows the advertising white space. An advertiser knows from the metadata if the advertisement is shown or acoustic announced. Further the advertiser knows the exact place of a shown advertisement. The place of the shown advertisement reflects the value of the advertisement.

Therefore it is very advantageous when the metadata specifies information about the dimension, the type and/or the format of the additional content, which can be inserted into the digital content, and/or when the metadata specifies information about the particular time and/or the duration of the additional content, which can be inserted into the digital content. The more information the metadata provide, the easier the handling for the advertiser or the advertisement inserting intermediary. The advertiser or the advertisement inserting intermediary know from the details in the metadata all necessary information for inserting the additional content, in particular the advertisement, into the digital content.

Another preferred method step is characterized in that the metadata specifies information about contract agreements about the digital content and/or the permission to insert additional content into the digital content and/or the target group, which is aim of the digital content. This information allows anybody to see what the content producer allows to insert into the digital content or into the white space of the digital content, respectively.

It is advantageous when the metadata are been electronical codified by the digital content producer. This allows the content producer to ensure that only wanted actors, in particular the advertiser or the advertisement inserting intermediary, can access the metadata. Advertisers or the advertisement inserting intermediaries, who like to insert advertisements into the digital content of the content producer, can ask for permission to get a code, which allows them to access the metadata. A further preferred method step is characterized in that the codification of the metadata is been realised by a digital rights management.

The codification of the metadata can be realised by a digital rights management. Digital rights management enables the content producer to control access to and usage of the metadata and to restrictions associated with a specific instance of a digital work. The content producer can decide who is allowed to see the information in the metadata, which is necessary to produce the size and dimension of the additional content, in particular of the advertisement.

The digital content can have a graphical, a typefacial and/or an acoustical form. Further, the digital content can be a text, a graphical game, a video and/or a song. The metadata can be part of the digital content or the metadata can be supplied in the header of the digital content. In another method step the metadata can be supplied in a separate data file assigned to the digital content.

The content producer's part of the solution can be implemented as software on their computer server. The advertisement inserting intermediary's part of the solution can be implemented in various ways. As software on the intermediary's computer server, who inserts the additional content, in particular the advertisement, in the digital content, in particular into the mobile digital content, during the customer download process. As software distributed over the intermediary's computer server and the mobile device, especially the mobile phone, of the costumer. Depending on the capabilities of the mobile device, part of the insertion process can be implemented as a piece of software running on a mobile device. It is anticipated that in the future the mobile devices role in the process will continue to grow.

The mobile electronic device can be a mobile phone, a small portable computer, a smart phone, a PDA (PDA = personal digital assistant), or the like.

## Claims

1. Method for supplying information to a digital content by a digital content producer, whereas the digital content is developed for a visual and/or acoustic display at at least one mobile electronic terminal, **characterized in that** the information is been supplied by the digital content producer in form of metadata, which are assigned to the digital content, and that the metadata possesses details for inserting additional content into the digital content.

2. Method according to claim 1, **characterized in that** the additional content comprises advertising.

3. Method according to claim 1 or 2, **characterized in that** the metadata specifies information about the location, where the additional content can be inserted into the digital content.

4. Method according to one of the claims 1 to 3, **characterized in that** the metadata specifies information about the dimension, the type and/or the format of the additional content, which can be inserted into the digital content.

5. Method according to one of the claims 1 to 4, **characterized in that** the metadata specifies information about the particular time and/or the duration of the additional content, which can be inserted into the digital content.

6. Method according to one of the claims 1 to 5, **characterized in that** the metadata specifies information about contract agreements about the digital content and/or the permission to insert additional content into the digital content and/or the target group, which is aim of the digital content.

7. Method according to one of the claims 1 to 6, **characterized in that** the metadata are been electronical codified by the digital content producer.

8. Method according to claim 7, **characterized in that** the codification of the metadata is been realised by a digital rights management.

9. Method according to one of the claims 1 to 8, **characterized in that** the codification of the metadata is been realised by a digital rights management.

10. Method according to one of the claims 1 to 9, **characterized in that** the digital content has a graphical, a typefacial and/or an acoustical form.

11. Method according to one of the claims 1 to 10, **characterized in that** the digital content is a text, a graphical game, a video and/or a song.

12. Method according to one of the claims 1 to 11, **characterized in that** the metadata are part of the digital content.

13. Method according to one of the claims 1 to 11, **characterized in that** the metadata are been supplied in the header of the digital content.

14. Method according to one of the claims 1 to 11, **characterized in that** the metadata are been supplied in a separate data file assigned to the digital content.
